# EUROPÄISCHE PATENTSCHRIFT

(11) **EP 2 770 816 B1**
(45) Veröffentlichungstag und Bekanntmachung des Hinweises auf die Patenterteilung: **20.12.2017**
(21) Anmeldenummer: 12753993.0
(22) Anmeldetag: 04.09.2012
(51) Int. Cl.: A01J 15/12

(54) **VERFAHREN ZUR OPTIMIERUNG EINES AUTOMATISIERTEN BUTTERUNGSPROZESSES**
METHOD FOR OPTIMIZING AN AUTOMATED BUTTERING PROCESS
PROCÉDÉ D'OPTIMISATION D'UN PROCESSUS DE BARATTAGE AUTOMATISÉ

(30) Priorität: 29.10.2011 DE 102011117195
(43) Veröffentlichungstag der Anmeldung: 03.09.2014
(73) Patentinhaber: GEA Mechanical Equipment GmbH, 59302 Oelde (DE)
(72) Erfinder: HEYMANN, Bernhard, 59199 Bönen (DE); KROHN, Dieter, 59269 Beckum (DE)
(74) Vertreter: Specht, Peter
(86) Internationale Anmeldenummer: PCT/EP2012/067179
(87) Internationale Veröffentlichungsnummer: WO 2013/060515

(56) Entgegenhaltungen:
- EP-A1- 2 327 296
- EP-A1- 2 327 312
- WO-A1-81/01788
- DD-A1- 231 476
- DE-A1-102009 039 272

## Beschreibung

Die Erfindung beschreibt ein Butterungsverfahren nach dem Oberbegriff des Anspruchs 1. Ein solches Verfahren ist aus der gattungsgemäßen EP 23 7296 bekannt, bei welcher der Kennwert die Rahmmenge ist..

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Schlagsahnebildung, der anschließenden Butterkornbildung, des Abtrennens von Buttermilch und des Knetens der Butter in einem kontinuierlichen Prozess automatisiert werden. Dabei wurden die Prozesse der Butterkornbildung von Butterungstrommeln und das Kneten der Buttermasse von Abpressem mit motorisierten Schneckenantrieben gewährleistet.

Eine Verfeinerung des Automatisierungsprozesses war bisher nur bedingt möglich, da sie von vielen Faktoren abhängt, die vorwiegend durch den Rahm als Ausgangsmaterial und die Verarbeitung desselben bestimmt werden. Neben den Ausgangseigenschaften des Rahms, beispielsweise Fettgehalt und vorangegangene Rahmreifung, sind Prozessparameter wie die Rahmtemperatur, die Zulaufleistung und die Schlägerdrehzahl wichtige Kenngrößen für den Butterungsprozess.

So führt ein hoher Fettgehalt zu einer schnelleren Butterbildung, da die Möglichkeit, dass Fettkügelchen miteinander kollidieren, erhöht ist. Fettreicher Rahm ist zudem durch eine hohe Viskosität charakterisiert, die sich im Verlauf des Schlagens durch die Suspensionsbildung mit Luft noch weiter erhöht. Die Folge ist ein erhöhter Energiebedarf beim Schlagen. Weiterhin kann die hohe Viskosität dazu führen, dass der Rahm an der Zylinderwandung haften bleibt, was die Bildung von Butterkorn erschwert.

Ein weiterer wichtiger Prozessparameter ist der Reifungsverlauf, da der Kristallisationsgrad abhängig vom Zeit- und Temperaturverlauf ist. Das Verhältnis von flüssigem zu auskristallisiertem Fett hat einen großen Einfluss auf die Emulsionsumkehr im Butterungszylinder. Bei gegebener Schlägerdrehzahl ist der Grundwassergehalt der Butter im Fall von langsam gereiftem Rahm mit höherem Kristallisierungsgrad niedriger als bei schnell gereiftem Rahm.

Auch der pH-Wert hat einen wichtigen Einfluss, da gesäuerter Rahm leichter buttert als ungesäuert Rahm, da die Fettkügelchen sich weniger abstoßen.

Auch spielt die Größenverteilung der Fettkügelchen eine Rolle, da kleinere Fettkügelchen weitaus stabiler als größere sind. Somit erhöht sich die Butterungszeit bei überwiegend sehr kleinen Fettkügelchen und der Prozess wird ineffizienter.

Aufgrund der stets wechselnden Eigenschaften des Rahms wurde die Verarbeitung bisher manuell überwacht und bei Bedarf durch Änderung der Prozessparameter nachgestellt. Dabei waren eine ständige visuelle Kontrolle der Eigenschaften, sowie Erfahrungswerte und Fingerspitzengefühl nötig, um eine Regulierung vorzunehmen. Eine Überbutterung entsteht durch eine zu hohe Drehzahl des Schlägers und zeigt sich durch große Butterklumpen und einen hohen Wassergehalt. Eine Unterbutterung entsteht durch eine zu geringe Drehzahl des Schlägers und zeigt sich durch eine weiche Masse. Während die Überbutterung korrigiert werden kann, führt eine Unterbutterung zur Entgleisung des Prozesses.

Die visuelle Überwachung erfolgte bislang über ein Schauglas oder eine Kamera, und erforderte die ständige Beschäftigung einer Arbeitskraft zur Kontrolle des Butterungsprozesses.

Ein geringer Grundwassergehalt, für die optimale Zudosierung von Geschmacksstoffen, wurde dabei durch geringe Schlägerdrehzahlen erreicht, die nur knapp oberhalb des Unterbutterns lagen und machte bisher eine präzise manuelle Regelung, unabhängig von den restlichen automatisierten Prozessschritten nötig.

Die Schlägerdrehzahl im ersten Butterungszylinder ist somit ein besonders wichtiger Parameter für die Möglichkeit zur Prozessregelung. Sie wird erhöht bei abnehmendem Rahmfettgehalt, steigendem pH-Wert des Rahms, sinkender Butterungstemperatur und höherem Rahmzulauf uns stellt somit die entscheidende Stellgröße dar, mit der die Einflüsse sämtlicher anderer Parameter kompensiert werden können, um eine qualitativ hochwertige Butter zu erhalten.

Daher wurde eine Einstellung der Schlägerdrehzahl, üblicherweise durch einen frequenzgeregelten Antrieb mit Vorgabe eines konstanten Stellwertsignals vorgenommen, wobei der Antrieb beispielsweise durch einen Motor mit einer Wechselspannung einer vorbestimmten konstanten Frequenz erfolgte. Weitere Kenngrößen wie beispielsweise die Rahmtemperatur mussten dabei durch eine Mess- und Steuerungseinheit konstant gehalten werden.

Das Vorgehen bei der bekannten manuellen Fahrweise entspricht dem üblichen Aufbau eines Regelkreises. Das Ergebnis des Prozesses - in diesem Falle die Qualität der Butter - wird beurteilt und entsprechend der Abweichung vom Sollzustand wird eine Prozessgröße - in diesem Falle die Schlägerdrehzahl - erhöht oder erniedrigt. Da die Reaktionszeit von einer Änderung der Schlägerdrehzahl bis zur Qualitätsänderung am Austritt der Maschine mehrere Minuten betragen kann, können Änderungen an den Prozessparametern nur sehr langsam und vorsichtig vorgenommen werden.

Einen weiteren wichtigen Parameter stellt die Rahmtemperatur dar. Eine höhere Temperatur führt zu einer schnelleren Butterbildung. Als Butterungstemperatur wählt man in der Regel einen Bereich zwischen 11 und 13 °C, weil dann die Anteile der festen und flüssigen Phase des Milchfettes ungefähr gleich sind.

Außerdem ist der Volumenstrom des zulaufenden Rahms von Bedeutung. Ein hoher Volumenstrom bedeutet eine kurze Verweildauer im Butterungszylinder. Auf jede Verweildauer im Butterungszylinder muss mit einer Korrektur der Schlägerdrehzahl reagiert werden, wenn Butter mit gleicher Qualität hergestellt werden soll.

Ein optimaler Butterungsprozess ergibt sich somit aus der Kombination der sich gegenseitig beeinflussenden Parameter.

Ein Ansatz zu einer automatischen Regelung des Prozesses liegt darin, Eigenschaften der fertigen Butter wie z.B. den Wassergehalt zu messen und danach die Schlägerdrehzahl zu regeln. Ein derartiges Vorgehen wird beispielsweise durch die DD231476, WO8101788 oder DD221626A1 offenbart. Allen diesen Konzepten gemeinsam ist, dass eine Prozessgröße rückwirkend nach dem Prozessergebnis geregelt wird. Durch die lange Totzeit einer Buttermaschine sind alle diese Konzepte nicht geeignet, auf schnelle Änderung der Prozessparameter - wie eine sprunghafte Änderung der Rahmzufuhr - ausreichend schnell zu reagieren. In der Praxis hat sich deshalb auch keine derartige Regelung etabliert.

Aus der DE 10 2009 039272 A ist es bekannt, zur Regelung die Stromaufnahme des Abpressers oder der Nachbutterungstrommel heranzuziehen. Dies führt zu in Hinsicht auf die Verringerung zu einer Verstopfungsneigung zu guten Ergebnissen.

Es ist daher Aufgabe der vorliegenden Erfindung, ein Verfahren zur Herstellung von Butter bereitzustellen, in welchem die vorgenannten Probleme nicht oder lediglich im verminderten Umfang auftreten. Insbesondere soll ein Verfahren entwickelt werden, bei dem eine konstante Butterqualität auch dann gewährleistet wird, wenn sich der Volumenstrom des zulaufenden Rahms und die Rahmtemperatur ändert.

Die Erfindung löst diese Aufgabe mit den Merkmalen des Anspruchs 1.

Im Unterschied zum bisher bekannten Ansatz einer automatischen Regelung liegt der vorliegenden Erfindung die Erkenntnis zugrunde, dass die für eine optimale Butterqualität erforderliche Antriebsleistung der Schlägerwelle vorausberechnet werden kann aus verschiedenen Eingangsparametern wie Rahmfettgehalt, Eintrittstemperatur und/oder Zulaufmenge. Der wesentliche Vorteil dieser Art der Regelung ist, dass bei einer Änderung der Prozessbedingungen wie z.B. einem Tankwechsel oder einer Leistungsänderung die Schlägerleistung vorausschauend angepasst werden kann und nicht erst dann reagiert wird, wenn es zu einer Qualitätsänderung gekommen ist. Auch ist die Schnelligkeit dieser Regelung nicht begrenzt durch eine Totzeit wie im vorher beschriebenen Fall.

Eine derartige Regelung einer Buttermaschine nach Anspruch 1 erlaubt dadurch einen weitestgehend unbeaufsichtigten Betrieb der Maschine, bietet eine automatische Anpassung an variierende Prozessbedingungen und erzielt eine sehr konstanten Butterqualität. Sie bietet auch verbesserte Möglichkeiten, die Prozesseinstellungen im Sinne eines geringen Grundwassergehalts in der Butter zu optimieren, wodurch die Zudosierung von geschmacksgebenden Bakterienkulturen nach dem Nizo-Verfahren, als auch von Salzbrei und von Trinkwasser (bis zu maximal 16% Wassergehalt in der fertigen Butter) erfolgen kann.

Neben der Arbeitsentlastung des Bedienpersonals wird auch das Risiko von Ausfallzeiten durch Prozessstörungen drastisch verringert. Des Weiteren bietet die automatische Regelung die Möglichkeit, die Anlagenleistung auf einfache Weise an die Abnahme der nachgeschalteten Verpackungslinie anzupassen. Auch die automatische Inhaltsregelung eines zwischengeschalteten Buttersilos wird dadurch möglich.

Vorteilhafte Ausgestaltungen der Erfindung sind den Unteransprüchen zu entnehmen.

Dies erfindungsgemäße Regelung des Butterungsvorgangs vermeidet die Gefahr einer Unterbutterung und ermöglicht es, zugleich mehrere Kenngrößen des Rahms als auch entsprechende Prozessgrößen in die Regelung der Antriebsleistung einzubeziehen. Zudem gelingt es, dass sich verschiedene Effekte und Kenngrößen teilweise gegenseitig kompensieren und damit ein Energieersparnis im Vergleich zu bisherigen Verfahren erzielt wird.

Nach der Erfindung erfolgt die Regelung der Antriebsleistung in Abhängigkeit vom Rahmfettgehalt und/oder der Rahmtemperatur als Kennwerte. Damit ist gewährleistet, dass keine zusätzliche Steuerung zur Konstanthaltung der Rahmtemperatur oder eine manuelle Überwachung der zudosierten Rahmmenge erfolgen muss, sondern all diese Größen in die Auswertung zur Regulierung einer optimalen Antriebsleistung einbezogen werden. Dadurch gelingt es, neben einer genaueren Abstimmung des Butterungsprozesses, auch eine apparative Vereinfachung, durch Wegfall der Temperaturkontrolleinheit des Rahms, vorzunehmen.

Besonders bevorzugt sei hierbei ein Verfahren, welches diese Kenngrößen direkt durch eine mehrdimensionale Regelung der Antriebsleistung ermöglicht, wodurch viele Eigenschaften des Rahm zur Regelung der Antriebsleistung des Schlägers herangezogen werden.

Dies gelingt insbesondere, wenn jeder Einzelparameter mittels Kennfelder computertechnisch überwacht werden kann, um ein gleichbleibend hochwertiges Butterungsergebnis zu erzielen. Somit kann auch jede Kenngröße des Rahms gezielt in Kennfeldern ausgewertet werden, wodurch sich, neben der genauen Einzelüberwachung, auch die Qualitätsüberprüfung des Rahms vereinfacht.

Während der Butterung spielt die Rahmtemperatur eine entscheidende Rolle bei der Trennung in Butterkorn und Buttermilch.

Daher wird durch das Verfahren vorzugsweise regelnd gesichert, dass eine Maximalerwärmung des Rahms um nicht mehr als 10 Kelvin, vorzugsweise nicht mehr als 3 Kelvin erfolgt.

Die Antriebsleistung des Schlägers ist durch einen einfachen Messaufbau, mittels eines Frequenzwandlers, vorteilhaft ermittelbar.

In einer vorteilhaften Ausführungsform der Erfindung wird eine Kühlung des Butterungskorns durch eine Kühlsektion vorgenommen. Die Kühlung erfolgt zwischen der Butterung und einer Nachbutterung, um dem jeweiligen Butterkorn eine härtere Konsistenz zu geben und eine leichtere Einstellung der optimalen Butterkorngröße im Nachbutterungsprozess zu ermöglichen.

In diesem Nachbutterungsprozess wird in einer Nachbutterungstrommel die Butterkorngröße gesteuert, um anschließend im Abpresser eine homogene Masse zu bilden und Fettkonzentrationen oder Wassereinschlüsse zu vermeiden.

Die Butterkörner werden vom Nachbutterungsprozess, unter Ableitung der Buttermilch, in einen Abpresser überführt, welcher mit Hilfe eines Schneckenantriebs das Butterkorn knetet, von Buttermilchresten befreit und hinsichtlich der Wasserverteilung homogenisiert.

Zudem wird eine Vermischung von Zusatzstoffen im Anschluss an das Trennen des Rahms in Butterkorn und Buttermilch durch einen weiteren Abpresser angestrebt. Geschmack und Aussehen des Produktes können in diesem Schritt variiert werden. Die dafür nötigen Zusatzstoffe können in Folge der Homogenisierung relativ leicht in die Butter eingearbeitet werden.

Bei einer vorteilhaften Verfahrensvariante wird zudem das Absaugen von Lufteinschlüssen im Produkt in einer Vakuumzone gewährleistet, um so die Haltbarkeit der Butter zu verbessern.

Um eine abschließende Feinjustierung der Konsistenz als auch des Wassergehaltes in der Butter durchzuführen, ist in der Maschine im Anschluss an die Vakuumzone vorteilhafterweise ein weiterer Abpresser und eine Mischzone für die Wasserdosierung vorgesehen.

Die fertige Butter kann nunmehr über eine Austragpumpe aus dem Gerät abgeführt werden.

Die optische Kontrolle, mittels eines Sichtfensters in der Wandung der Nachbutterungstrommel, schafft den Vorteil einer weiteren Übenrvachungsmöglichkeit, neben der Möglichkeit zur Überwachung von rahmspezifischen Größen.

In einer vorteilhaften Ausführungsform der Erfindung überwacht eine Mess- und Steuereinheit, gekoppelt mit dem Schlägerantrieb, die momentane Antriebsleistung des Schlägers und vergleicht diese mit den veränderlichen Kenngrößen des Rahmfettgehaltes, der Rahmtemperatur und des Zulaufs an Rahm, um die Antriebsleistung des Schlägers anschließend einem vorgegebenen Sollwert anzupassen. Damit ermöglicht diese Sensorik eine unkomplizierte und zudem zeitnahe Überwachung des Produktionsprozesses. Der Sollwert kann dabei beispielsweise optisch, durch Betrachtung des Butterungsprozesses durch das Sichtfenster, festgelegt werden.

Zur Vereinfachung des Regelungsvorgangs gehen sämtliche Kenngrößen in einen Rechenwert (BCU-Wert) ein, in welchem sich gegensätzliche Effekte, beispielsweise der Temperatur und der Rahmmenge zumindest teilweise kompensieren und durch Regelung einer oder mehrerer Kenngrößen der Sollwert diesem Rechenwert angepasst wird.

Ein Ausführungsbeispiel der Erfindung wird anhand der beigefügten Zeichnungen erläutert, darüber hinaus werden Abbildungen aufgeführt, anhand welcher die Problemlösung veranschaulicht wird. Sie zeigen:
- Fig.1: eine schematische Darstellung einer Butterungsmaschine, die nach dem Fritz/Eisenreich Verfahren betrieben wird,
- Fig.2 a-c: eine Abfolge von Abbildungen des Prozesses der Abbutterung, der Überbutterung und der Unterbutterung,
- Fig.3: eine Prinzipskizze verschiedener Kenngrößen und deren Einfluss auf die erforderliche Antriebsleistung eines Schlägers eines Butterungszylinders,
- Fig.4 a-c: verschiedene Kennfelder für die Leistungsregelung einer Butterungsmaschine,
- Fig.5: eine Messwerttabelle der automatischen Regelung der Antriebsleistung des Schlägers nach der Rahmzulaufzeit mittels eines BCU-Rechenwerts, und
- Fig. 6a-d: Diagramme, welche Ergebnisse manueller bzw. automatischer Regelungen veranschaulichen.

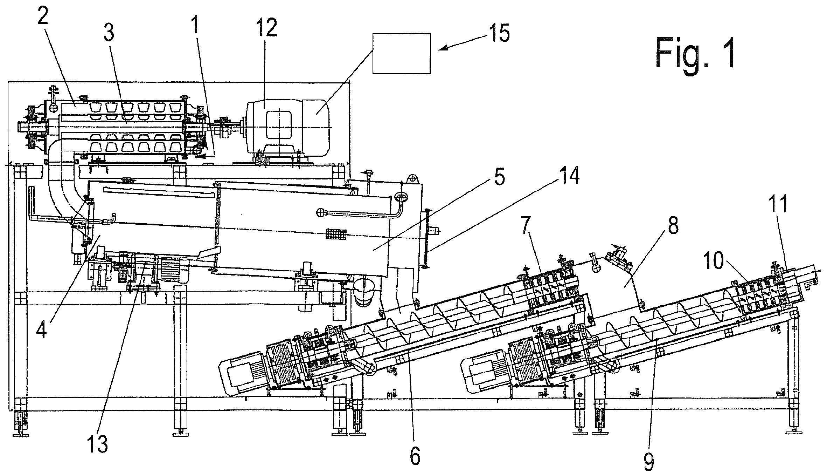

Fig. 1 zeigt eine Butterungsmaschine, die einen Einlauf 1 für Rahm aufweist, sowie einen Butterungszylinder 2 mit einem drehbar angetriebenen Schläger 3 für die Bildung von Butterkorn und Buttermilch aus zugeführtem Rahm.

In einer Kühlsektion 4 erhält das Butterkorn eine härtere Konsistenz und lässt sich anschließend besser bearbeiten.

In einer Nachbutterungstrommel 5 wird im Nachbutterungsprozess die optimale Butterkorngröße eingestellt.

Ein Abpresser 6 verringert den Gehalt der Butter an Buttermilchresten, welche anschließend abgeführt werden.

In einer Mischzone 7 werden zu der Butter Wasser, Säurekonzentrate und Salzlake zudosiert, um den Geschmack und die Konsistenz der Butter zu optimieren.

In einer Vakuumkammer 8 wird der Butter Luft entzogen, um deren Haltbarkeit zu erhöhen.

Ein weiterer Abpresser 9, sorgt zusammen mit einer sich daran anschließende Mischzone 10 für eine gleichmäßige Verteilung des Wassergehaltes in der Butter und eine Optimierung des Wassergehaltes.

Mit einer Austragspumpe 11 wird der Ablauf der fertigen Butter aus der Maschine gewährleistet.

Der Schläger 3 wird durch den Schlägerantrieb 12 angetrieben, welcher wiederum mit der Mess- und Steuereinheit 15 verbunden ist.

Eine optische Kontrolle der Nachbutterung kann zusätzlich durch ein Sichtfenster 14 erfolgen.

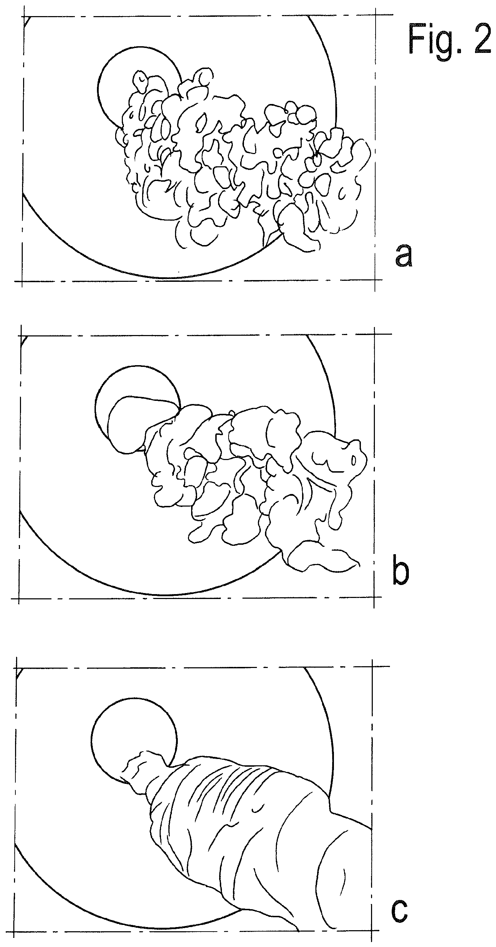

In Fig. 2 ist sowohl ein optimaler Abbutterungsprozess (Fig. 2a), als auch eine Überbutterung (Fig. 2c) und eine Unterbutterung (Fig. 2b) aus der Sichtfensterperspektive 14 dargestellt. Die geleistete mechanische Arbeit des Schlägers 3 in dem Butterungszylinder 2 bestimmt dabei zum Großteil die Korngröße des Butterkorns. Dieses ist im Optimalfall faustgroß.

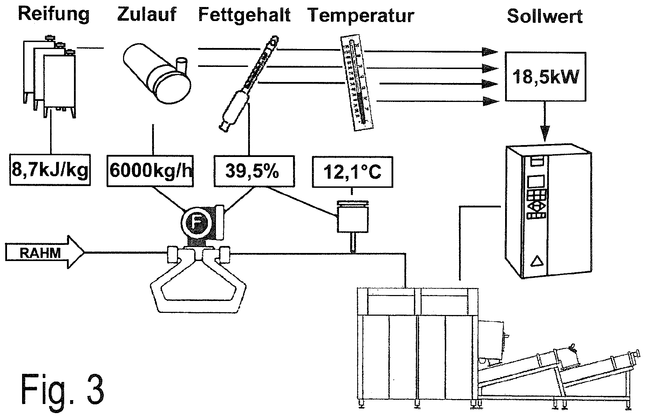

Die Antriebsleistung des Schlägers, welcher von dem Schlägerantrieb 12 betrieben wird, ist in Fig. 3 in Abhängigkeit zu Kenngrößen wie dem Rahmfettgehalt, der Dauer der Rahmreifung, der Temperatur der Rahmreifung, der Rahmtemperatur und der Rahmzulaufleistung gebracht. Der ermittelte Sollwert der Mess- und Steueranlage 15 regelt dabei die Antriebsleistung, welche der Schlägerantrieb 12 erbringen muss, um die Rotationsgeschwindigkeit des Schlägers an einen entsprechenden Sollwert anzugleichen.

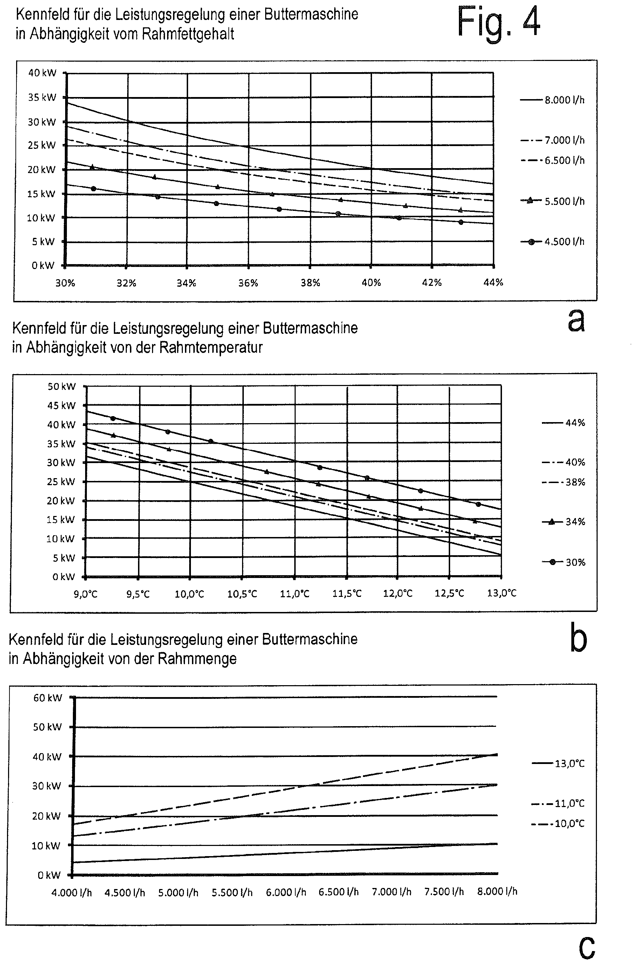

Fig. 4 zeigt verschiedene Kennfelder, welche
a) eine Leistungsregelung anhand des prozentualen Rahmgehaltes,
b) eine Leistungsregelung nach der Rahmtemperatur, und
c) eine Leistungsregelung nach der Rahmmenge veranschaulichen bzw. ermöglichen.

Die Auswertung und Zusammenfassung mehrerer Kenngrößen zu einem Rechenwert (BCU - Churning Units) ermöglicht die besonders gezielte Regelung der Schlägerleistung.

So wird nach einem bevorzugten Modell angenommen, dass die benötigte Energie zur Verbutterung einer Masseneinheit bei einer gegebenen Temperatur konstant ist. Mit dieser Annahme kann einfach automatisch regelnd auf Zuflussmengenänderungen durch eine entsprechende Leistungsänderung reagiert werden.

Beispielsweise durch Messreihen kann ferner der Einfluss einer Temperaturänderung je Masseneinheit ermittelt werden. Diese Werte werden abgespeichert oder beispielsweise in einer Formel zusammengefasst. Sodann kann durch Rückgriff auf die Kennfelder automatisch die Schlägerleistung auch in Abhängigkeit von der Temperatur angepasst werden.

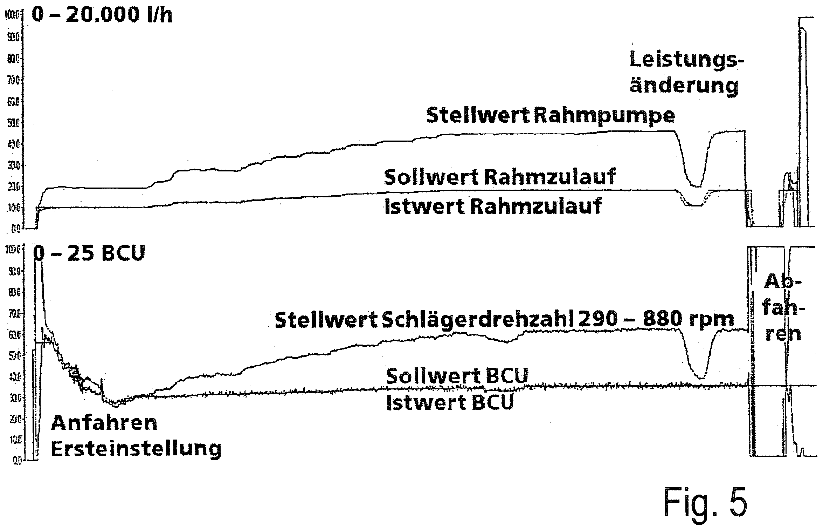

Fig. 5 zeigt ein Kennfeld des zusammengefassten Rechenwertes BCU zur Überwachung und der Prozesskontrolle, anhand dessen die Regelung der Antriebsleistung des Schlägers 3 des Butterungszylinders 2 nach dem Rahmzulauf erfolgt. In die BCU-Berechnung fließen bei dieser Ausführungsvariante beispielsweise die Zulaufleistung bzw. die Zulaufmenge, die Rahmdichte und die abgegebene Antriebsleistung ein. Dies gibt die Möglichkeit, beispielsweise auf einen veränderlichen Fettgehalt des Rahms direkt zu reagieren.

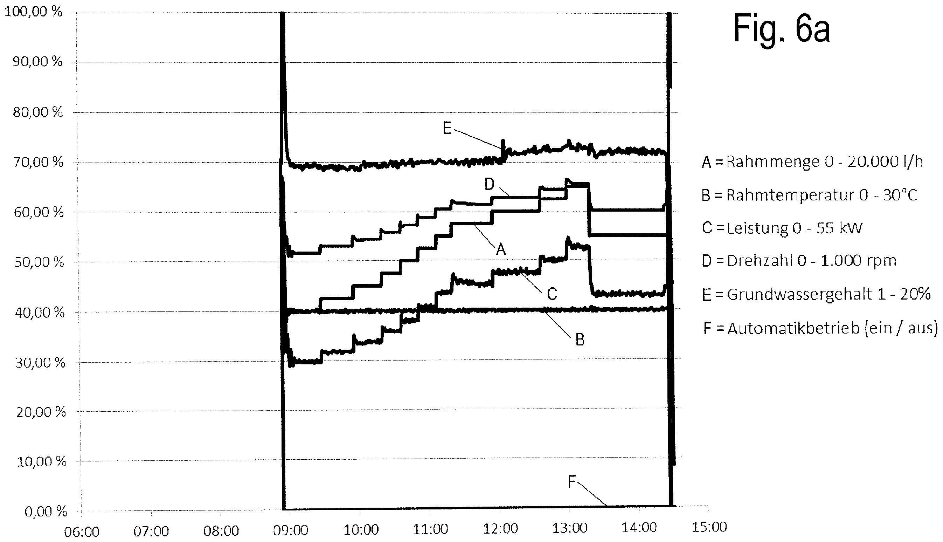

In einer Versuchsreihe an einer Installation mit einer Buttermaschine BUE 6000 von Westfalia Separator wurde während laufender kommerzieller Produktionen die erfindungsgemäße Regelung mit der bisherigen manuellen Korrektur verglichen. Dabei wurden Rahmtemperatur und Rahmmenge in sehr weiten Bereichen variiert, was in der normalen Produktion normalerweise vermieden wird (siehe Fig. 6a - d). Als Maß für den Butterungsgrad (y-Achse) wurde der Grundwassergehalt über einen Zeitraum (x-Achse) erfasst.

Fig. 6a zeigt Ergebnisse einer eine manuellen Korrektur der Schlägerdrehzahl bei Veränderung der Zulaufmenge, wie sie bislang erfolgt ist.

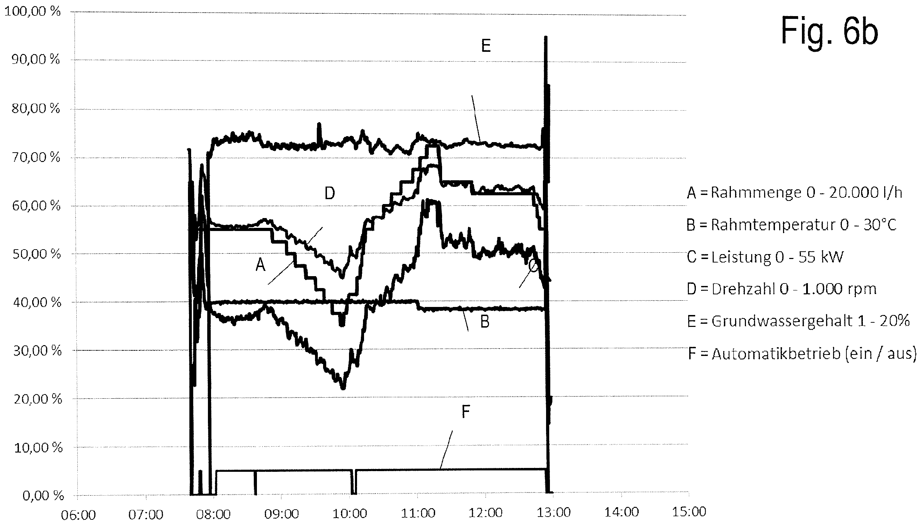

Fig. 6b zeigt die vorteilhaften Ergebnisse einer eine automatischen Regelung der Schlägerleistung in Abhängigkeit von einer Veränderung der Zulaufmenge;

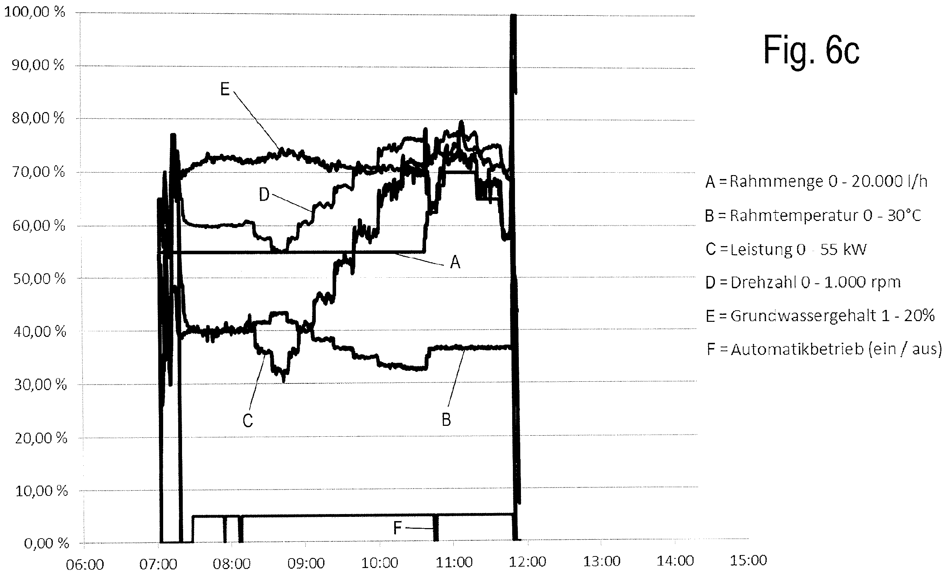

Fig. 6c zeigt Ergebnisse einer manuellen Korrektur der Schlägerdrehzahl bei Veränderung der Rahmtemperatur; und

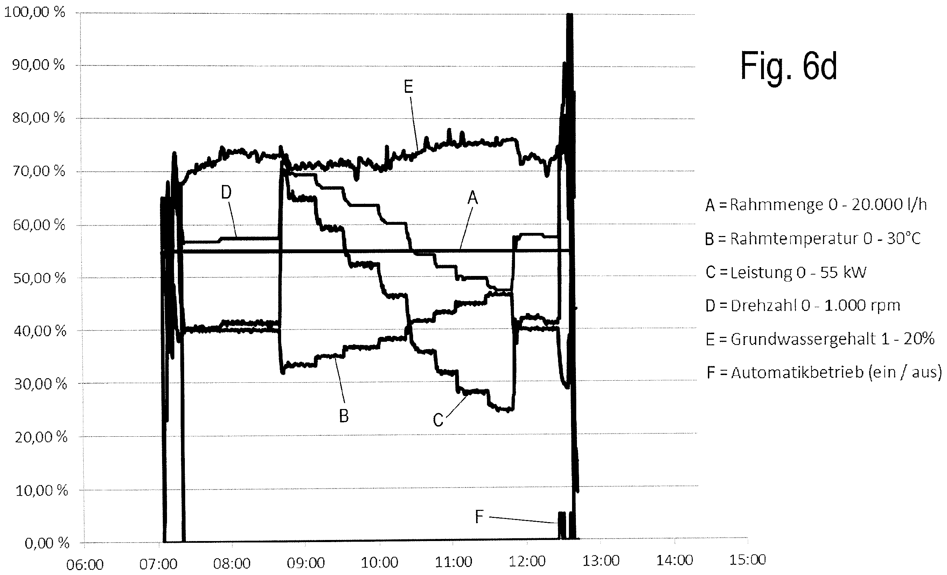

Fig. 6d zeigt die vorteilhaften Ergebnisse einet automatischen Regelung der Schlägerleistung in Abhängigkeit von einer Veränderung der Rahmtemperatur.

Bei Vergleich der Fig. 6a und 6b oder der Fig. 6c und 6d kann festgestellt werden, dass die Ergebnisse der automatischen Regelung der manuellen Einstellung absolut ebenbürtig sind.

Wird der Butterungsprozess per Hand für jede Veränderung der Rahmleistung (Zulaufmenge) angepasst, so vergeht bei jeder Einstellung eine bestimmte Zeit, bis der gewünschte Abbutterungsgrad erneut gefunden wird. Bei der schrittweisen Drehzahleinstellung kommt es somit in gewissen Zeitabständen zur Über- bzw. Unterbutterung, was sich durch lokale Minima und Maxima im Grundwasserhalt der Butter äußert. Im geregelten Betrieb hingegen stellt der Maschinenführer nur die gewünschte Zulaufmenge ein. worauf sich die Schlägerleistung unmittelbar anpasst. Dadurch kann auch bei einer veränderten Rahmmenge die Butterung gleichmäßiger erfolgen.

Während eine Änderung der Rahmleistung sehr schnell erfolgen kann, findet eine Temperaturänderung des Rahms eher langsam und auch schwankend statt. Daher ist eine Anpassung der Schlägerleistung hier schwieriger zu bewerkstelligen. Aber auch hier konnte gezeigt werden, dass im geregelten Prozess die Schlägerleistung auch bei Temperaturänderungen derart anpassbar sind, dass eine sichere Prozessführung ermöglicht wird.

Insgesamt kann durch die Erfindung der Butterungsprozess einfacher und sicherer gestaltet werden, da sowohl unbeabsichtigte Temperaturschwankungen als auch geänderte Rahmmengen durch eine Leistungsanpassung des Schlägers abgefangen werden können. Der Butterungsprozess bleibt auch bei größeren Schwankungen sicher steuerbar. Im Vergleich zu einer manuellen Prozessführung konnte kein wesentlicher Unterschied in der Prozess- oder Produktqualität ausgemacht werden.

Um den Prozess noch weiter zu verbessern, ist es denkbar, eine Kamera im zweiten Butterungszylinder zu installieren. Eine Übertragung der Aufnahmen der Kamera in einen Steuerraum schafft die Möglichkeit, die Butterungsmaschine aus einem anderen Raum zu kontrollieren und von dort Änderungen am Prozess vorzunehmen.
Eine weitere Prozessoptimierung ist zu erreichen, indem der Rahmzulauf über den Füllstand des Buttersilos geregelt wird. Dazu ist es sinnvoll, das Buttersilo mit Wiegezellen auszustatten, die kontinuierlich das Gewicht des Behälters messen und an die Steuerung weitergeben. Ist ein vorgegebener Schwellenwert des Füllstandes überschritten, so reduziert sich der Rahmdurchfluss. Bei einer Unterschreitung eines Schwellenwertes erhöht sich die Rahmmenge. Auf diese Weise kann über die Füllstandskontrolle des Buttersilos ermittelt werden, wie hoch die zu verbutternde Rahmmenge ist.

In einer Weiterentwicklung der Erfindung kann vorgesehen sein, unterschiedliche Fettgehälter, Fettsäurenspektren und Rahmreifungsprofile mit einzubeziehen und die Schlägerleistung hinsichtlich dieser Parameter entsprechend anzupassen.

Insbesondere kann eine Leistungsanpassung bei einem Tankwechsel mit neuem Rahm erfolgen, da ein solcher Wechsel stets mit einer Änderung der Temperatur und des Fettgehaltes begleitet ist.

**Bezugszeichen**

| | |
|---|---|
| Einlauf | 1 |
| Butterungszylinder | 2 |
| Schläger | 3 |
| Kühlsektion | 4 |
| Nachbutterungstrommel | 5 |
| Abpresser | 6 |
| Mischzone | 7 |
| Vakuumkammer | 8 |
| Abpresser | 9 |
| Mischzone | 10 |
| Austragspumpe | 11 |
| Schlägerantrieb | 12 |
| Antrieb | 13 |
| Sichtfenster | 14 |
| Mess- und Steuereinheit | 15 |

## Patentansprüche

1. Verfahren zur Herstellung von Butter in einer Butterungsmaschine die mindestens einen Einlauf (1), einen Butterungszylinder (2) mit einem drehbaren Schläger (3), der über einen Schlägerantrieb (12) mit einer Antriebsleistung betrieben wird, und einen Ablauf aufweist, wobei zulaufender Rahm in dem Butterungszylinder (2) in Butterkorn und Buttermilch umgewandelt wird,
a) wobei mindestens ein Kennwert des Rahms gemessen oder vorgegeben wird, **dadurch gekennzeichnet, dass**
b) eine Erfassung eines Istwertes der momentanen Antriebsleistung des Schlägers (3) erfolgt, und
c) ein Sollwert der Antriebsleistung des Schlägers (3) in Abhängigkeit von dem in Schritt a) gemessenen oder vorgegebenen Kennwert ermittelt und der Schlägerantrieb (12) auf diesen Sollwert geregelt wird,
d) wobei als Kennwert die Rahmtemperatur und/oder der Rahmfettgehalt verwendet wird.

2. Verfahren nach Anspruch 1, **dadurch gekennzeichnet, dass** als Kennwert des Rahms ferner die zugegebene Rahmmenge verwendet wird.

3. Verfahren nach einem der vorangegangenen Ansprüche, **dadurch gekennzeichnet, dass** die Antriebsleistung des Schlägers (3) zusätzlich in Abhängigkeit vom Wassergehalt der Butter geregelt wird.

4. Verfahren nach den vorangegangenen Ansprüchen, **dadurch gekennzeichnet, dass** die Antriebsleistung des Schlägers (3) anhand einer mehrdimensionalen Regelung unter Zuhilfenahme mehrerer Kennwerte und gegebenenfalls dem Wassergehalt der Butter gesteuert wird.

5. Verfahren nach den vorangegangenen Ansprüchen, **dadurch gekennzeichnet, dass** einzelne Kenngrößen und deren Änderung während des Butterungsprozesses visuell in Kennfelder dargestellt werden.

6. Verfahren nach den vorangegangenen Ansprüchen, **dadurch gekennzeichnet, dass** die Erwärmung des Rahms während des Butterungsprozesses maximal 10 K, vorzugsweise 3 K beträgt.

7. Verfahren nach den vorangegangenen Ansprüchen, **dadurch gekennzeichnet, dass** die Antriebsleistung des Schlägers (3) anhand von Frequenzumformem erfasst werden kann.

8. Verfahren nach einem der vorangegangenen Ansprüche, **dadurch gekennzeichnet, dass** eine Kühlung des Butterkorns nach den Schritten a) und b) durch eine Kühlsektion (4) erfolgt.

9. Verfahren nach einem der vorangegangenen Ansprüche, **dadurch gekennzeichnet, dass** eine Optimierung der Butterung, insbesondere der Butterkorngröße, in einer Nachbutterungstrommel (5) erfolgt.

10. Verfahren nach Anspruch 9, **dadurch gekennzeichnet, dass** der Nachbutterung nachgeschaltet, eine Bearbeitung des Butterkorns in einem Abpresser (6) erfolgt.

11. Verfahren nach einem der vorangegangenen Ansprüche, **dadurch gekennzeichnet, dass** eine Zudosierung und Vermischung von Zusätzen durch eine Mischzone (7) im Anschluss an den Abpresser (6) erfolgt.

12. Verfahren nach einem der vorangegangenen Ansprüche, **dadurch gekennzeichnet, dass** eine Entfernung von Luft aus einer Buttermasse durch eine Vakuumzone (8) im Anschluss an eine Mischzone (7) ermöglicht wird.

13. Verfahren nach einem der vorangegangenen Ansprüche, **dadurch gekennzeichnet, dass** die Feineinstellung der Konsistenz des Produktes als auch dessen Wassergehalt durch einen weiteren Abpresser (9) und eine weitere Mischzone (10) im Anschluss an eine Vakuumzone (8) vorgenommen wird.

14. Verfahren nach einem der vorangegangenen Ansprüche, **dadurch gekennzeichnet, dass** die Ausgabe der fertigen Buttermasse durch eine Austragspumpe (11) im Anschluss an eine Mischzone (10) erfolgt.

15. Verfahren nach einem der vorangegangenen Ansprüche, **dadurch gekennzeichnet, dass** die zusätzliche optische Kontrolle des Butterungsprozesses in der Nachbutterungstrommel (5) über Sichtfenster (14) erfolgt.

16. Verfahren nach einem der vorangegangenen Ansprüche, **dadurch gekennzeichnet, dass** zur Überwachung und Steuerung der Butterung aus verschiedenen Produkt- und Prozesskenngrößen ein Rechenwert errechnet wird, der in Verbindung mit der Mess- und Steuereinheit (15) den Butterungsprozess an einen vorgegebenen Sollwert angepasst wird.

17. Verfahren nach einem der vorangegangenen Ansprüchen, **dadurch gekennzeichnet, dass** eine Berechnung des Rechenwertes unter Einbeziehung von Kenngrößen, insbesondere der Rahmmenge, der Rahmtemperatur und des Rahmfettgehalts, erfolgt und eine Einstellung auf den vorgegebenen Sollwert, durch Regulierung dieser Kenngrößen, ermöglicht wird.

18. Verfahren nach einem der vorangegangenen Ansprüche, **dadurch gekennzeichnet, dass** eine Kamera im Butterungszylinder (2) vorgesehen ist, deren Bilder in einen Steuerraum übertragen werden.

19. Verfahren nach einem der vorangegangenen Ansprüche, **dadurch gekennzeichnet, dass** der Butterungsprozess von einem Steuerungsraum überwacht wird.

20. Verfahren nach einem der vorangegangenen Ansprüche, **dadurch gekennzeichnet, dass** der Rahmzulauf über den Füllstand eines Buttersilos geregelt wird.

21. Verfahren nach Anspruch 20, **dadurch gekennzeichnet, dass** das Buttersilo mit Wiegezellen ausgestattet ist, die kontinuierlich das Gewicht des Behälters messen und an die Steuerung weitergeben.

22. Verfahren nach einem der vorangegangenen Ansprüche, **dadurch gekennzeichnet, dass** unterschiedliche Fettgehälter, Fettsäurenspektren und Rahmreifungsprofile berücksichtigt werden, um die Antriebsleistung des Schlägers (3) zu regeln.

23. Verfahren nach einem der vorangegangenen Ansprüche, **dadurch gekennzeichnet, dass** eine Anpassung der Antriebsleistung des Schlägers (3) bei einem Tankwechsel mit neuem Rahm erfolgt.

## Claims

1. A method for producing butter in a churning machine which has at least one inlet (1), a churning cylinder (2) with a rotatable beater (3), which is operated with a driving power via a beater drive (12), and an outlet, wherein supplied cream is converted in the churning cylinder (2) into butter grains and buttermilk,
a) wherein at least one characteristic value of the cream is measured or predetermined,
**characterized in that**
b) an actual value of the current driving power of the beater (3) is detected, and
c) a setpoint value of the driving power of the beater (3) is determined as a function of the characteristic value measured or predetermined in step a) and the beater drive (12) is adjusted to said setpoint value,
d) wherein the fat content of the cream and/or the temperature of the cream are used as characteristic values.

2. The method as claimed in claim 1, **characterized in that** the added quantity of cream is also used as the characteristic value of the cream.

3. The method as claimed in one of the preceding claims, **characterized in that** the driving power of the beater (3) is additionally adjusted as a function of the water content of the butter.

4. The method as claimed in one of the preceding claims, **characterized in that** the driving power of the beater (3) is controlled on the basis of a multidimensional adjustment with the assistance of a plurality of characteristic values and optionally the water content of the butter.

5. The method as claimed in one of the preceding claims, **characterized in that** individual characteristic variables and the modification thereof during the churning process are depicted visually in characteristic fields.

6. The method as claimed in the preceding claims, **characterized in that** the cream is heated during the churning process to a maximum of 10 K, preferably 3 K.

7. The method as claimed in the preceding claims, **characterized in that** the driving power of the beater (3) can be detected with reference to frequency converters.

8. The method as claimed in one of the preceding claims, **characterized in that** the butter grains are cooled between steps a) and b) by a cooling section (4).

9. The method as claimed in one of the preceding claims, **characterized in that** an optimization of the churning, in particular of the butter grain size, takes place in an after-churning drum (5).

10. The method as claimed in claim 9, **characterized in that** the butter grains are processed in a texturizer (6) downstream of the after-churning.

11. The method as claimed in one of the preceding claims, **characterized in that** additives are metered in and mixed by a mixing zone (7) following the texturizer (6).

12. The method as claimed in one of the preceding claims, **characterized in that** air can be removed from a butter mass by a vacuum zone (8) following a mixing zone (7).

13. The method as claimed in one of the preceding claims, **characterized in that** the precise adjustment of the consistency of the product and also of the water content thereof is undertaken by a further texturizer (9) and a further mixing zone (10) following a vacuum zone (8).

14. The method as claimed in one of the preceding claims, **characterized in that** the finished butter mass is discharged by an ejector pump (11) following a mixing zone (10).

15. The method as claimed in one of the preceding claims, **characterized in that** the additional optical checking of the churning process in the after-churning drum (5) takes place via inspection windows (14).

16. The method as claimed in one of the preceding claims, **characterized in that**, in order to monitor and control the churning, a calculation value is calculated from various product and process characteristic variables, said calculation value, in conjunction with the measuring and control unit (15), to adapt the churning process to a predetermined setpoint value.

17. The method as claimed in one of the preceding claims, **characterized in that** the calculation value is calculated with the inclusion of characteristic variables, in particular the quantity of cream, the temperature of the cream and the fat content of the cream, and can be set to the predetermined setpoint value by adjusting said characteristic variables.

18. The method as claimed in one of the preceding claims, **characterized in that** a camera is provided in the churning cylinder (2), and the images taken by said camera are transmitted into a control room.

19. The method as claimed in one of the preceding claims, **characterized in that** the churning process is monitored from a control room.

20. The method as claimed in one of the preceding claims, **characterized in that** the supply of cream is adjusted via the filling level of a butter silo.

21. The method as claimed in claim 20, **characterized in that** the butter silo is equipped with weighing cells which continuously measure the weight of the container and forward the weight to the controller.

22. The method as claimed in one of the preceding claims, **characterized in that** different fat contents, fatty acid spectra and maturation profiles of the cream are taken into consideration in order to adjust the driving power of the beater (3).

23. The method as claimed in one of the preceding claims, **characterized in that** the driving power of the beater (3) is adapted in the event of a tank change with new cream.

## Revendications

1. Procédé pour la fabrication de beurre dans une machine de barattage comprenant au moins une entrée (1), un cylindre de baratte (2) avec un batteur rotatif (3) qui est actionné par un entraînement de batteur (12) ayant une puissance d'entraînement, et un écoulement, la crème amenée étant transformée en grains de beurre et en babeurre dans le cylindre de baratte (2),
a) dans lequel au moins une valeur caractéristique de la crème est mesurée ou prédéterminée,
**caractérisé en ce que**
b) une valeur réelle de la puissance d'entraînement instantanée du batteur (3) est déterminée, et
c) une valeur de consigne de la puissance d'entraînement du batteur (3) est déterminée en fonction de la valeur caractéristique mesurée ou prédéterminée à l'étape a) et l'entraînement du batteur (12) est régulé à cette valeur de consigne,
d) la valeur caractéristique utilisée étant la température de la crème et/ou la teneur en matière grasse de la crème.

2. Procédé selon la revendication 1, **caractérisé en ce que** la quantité de crème ajoutée est utilisée en outre comme valeur caractéristique de la crème.

3. Procédé selon l'une des revendications précédentes, **caractérisé en ce que** la puissance d'entraînement du batteur (3) est régulée en outre en fonction de la teneur en eau du beurre.

4. Procédé selon l'une des revendications précédentes, **caractérisé en ce que** la puissance d'entraînement du batteur (3) est régulée en fonction d'une régulation à plusieurs dimensions à l'aide de plusieurs valeurs caractéristique et éventuellement de la teneur en eau du beurre.

5. Procédé selon l'une des revendications précédentes, **caractérisé en ce que** les différentes grandeurs caractéristiques et leur évolution pendant le processus de barattage sont représentées visuellement dans des champs caractéristiques.

6. Procédé selon l'une des revendications précédentes, **caractérisé en ce que** l'échauffement de la crème pendant le processus de barattage est au maximum de 10 K, de préférence de 3 K.

7. Procédé selon l'une des revendications précédentes, **caractérisé en ce que** la puissance d'entraînement du batteur (3) peut être déterminée à l'aide de convertisseurs de fréquence.

8. Procédé selon l'une des revendications précédentes, **caractérisé en ce que** les grains de beurre sont refroidis après les étapes a) et b) par une section de refroidissement (4).

9. Procédé selon l'une des revendications précédentes, **caractérisé en ce que** le barattage, en particulier la taille des grains de beurre, est optimisé dans un tambour de post-barattage (5).

10. Procédé selon la revendication 9, **caractérisé en ce que** le post-barattage est suivi d'un traitement du beurre en grains dans un pressoir (6).

11. Procédé selon l'une des revendications précédentes, **caractérisé en ce que** des additifs sont ajoutés et mélangés en passant par une zone de mélange (7) qui fait suite au pressoir (6).

12. Procédé selon l'une des revendications précédentes, **caractérisé en ce que** l'air peut être chassé d'une masse de beurre en passant par une zone sous vide (8) qui fait suite à une zone de mélange (7).

13. Procédé selon l'une des revendications précédentes, **caractérisé en ce que** le réglage fin de la consistance du produit et de sa teneur en eau est réalisé par un autre pressoir (9) et une autre zone de mélange (10) faisant suite à une zone sous vide (8).

14. Procédé selon l'une des revendications précédentes, **caractérisé en ce que** la masse de beurre finie sort en passant par une pompe d'extraction (11) qui fait suite à une zone de mélange (10).

15. Procédé selon l'une des revendications précédentes, **caractérisé en ce que** le contrôle visuel supplémentaire du processus de barattage dans le tambour de post-barattage (5) est réalisé à l'aide de hublots (14).

16. Procédé selon l'une des revendications précédentes, **caractérisé en ce qu'**afin de surveiller et de commander le barattage, une valeur de calcul est calculée à partir de différentes grandeurs caractéristiques du produit et du procédé et utilisée pour adapter le processus de barattage à une valeur de consigne prédéterminée en relation avec l'unité de mesure et de commande (15).

17. Procédé selon l'une des revendications précédentes, **caractérisé en ce que** la valeur de calcul est calculée en tenant compte de grandeurs caractéristiques, en particulier de la quantité de crème, de la température de la crème et de la teneur en matière grasse de la crème et une adaptation à la valeur de consigne prédéterminée par la régulation de ces grandeurs caractéristiques est rendue possible.

18. Procédé selon l'une des revendications précédentes, **caractérisé en ce qu'**il est prévu dans le cylindre de baratte (2) une caméra dont les images sont transmises dans une salle de contrôle.

19. Procédé selon l'une des revendications précédentes, **caractérisé en ce que** le processus de barattage est surveillé à partir d'une salle de contrôle.

20. Procédé selon l'une des revendications précédentes, **caractérisé en ce que** l'arrivée de la crème est régulée en fonction du niveau de remplissage d'un silo à beurre.

21. Procédé selon la revendication 20, **caractérisé en ce que** le silo à beurre est équipé de cellules de pesée qui mesurent le poids du réservoir en continu et le transmettent à la commande.

22. Procédé selon l'une des revendications précédentes, **caractérisé en ce que** différents taux de matière grasse, compositions d'acides gras et profils de maturation de la crème sont pris en compte pour réguler la puissance d'entraînement du batteur (3).

23. Procédé selon l'une des revendications précédentes, **caractérisé en ce que** la puissance d'entraînement du batteur (3) est adaptée en cas de changement de réservoir avec une nouvelle crème.
